(19) Europäisches Patentamt
European Patent Office
Office européen des brevets

(11) **EP 2 163 846 A1**

(12) **EUROPEAN PATENT APPLICATION**

(43) Date of publication:
**17.03.2010 Bulletin 2010/11**

(51) Int Cl.:
*G01B 5/00* (2006.01)        *G01B 11/25* (2006.01)
*G06K 9/00* (2006.01)        *G01B 11/08* (2006.01)

(21) Application number: **09396007.8**

(22) Date of filing: **01.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **02.09.2008 FI 20080493**

(71) Applicants:
• **Pietikäinen, Vilho Kalevi**
**40500 Jyväskylä (FI)**
• **Riekko, Pekka Tapio**
**45100 Saarijärvi (FI)**

• **Viitala, Risto Olavi**
**00250 Helsinki (FI)**
• **Kalliokulju, Sulo**
**40900 Säynätsalo (FI)**

(72) Inventors:
• **Pietikäinen, Vilho Kalevi**
**40500 Jyväskylä (FI)**
• **Riekko, Pekka Tapio**
**45100 Saarijärvi (FI)**
• **Viitala, Risto Olavi**
**00250 Helsinki (FI)**
• **Kalliokulju, Sulo**
**40900 Säynätsalo (FI)**

(54) **A measuring method of biomass in forest**

(57) The object of the invention is a method that measures forest and carbon store more effectively. The measure device measures the dimensions and diameters of trees and estimates the (inventory of the) whole forest. The measurement device in another mode measures saplings, wood species, division of the wood species, quantity of tree trunks, tree quantity, the free growth volume in other layers of the forest, the age of the forest, the age division of the forest, and carbon stores. The principal of method is optical measurement and laser distance measurement technique (Lidar, *Light Detection and Ranging*) but, in which the laser beams are synchronized to be parallel and simultaneous in direction and time. The size of the object is transferred in the same size (to eliminate perspective) , and the shape of the object is measured with, for example, vector or line integral method. Extra devices analyze digital photographs (machine vision) of a camera. For example, the intellectual mobile phone contains an extra device (with camera, GPS, extra sensors...), that logs in (data transfer) a server and databases. In the measurement and login device the programs calculate the analysis data in the real time measurements.

EP 2 163 846 A1

## Description

This measuring device is for making an inventory of trees when the diameters are measured from the ground. The measuring device can be used e.g. for finding out the spatial order of saplings, the distribution of tree species and the diameters of trunks, the amounts of trunks and timber and the free space of forest at different heights or layers. When the age distribution of trees is added to the carbon store, the ability to absorb carbon is found out. The method can also be used in built environment modeling.

The device is based on laser beams (optical measuring technique), which are synchronized to be parallel and simultaneous. In addition, the measuring device has a part which can analyze digital picture (machine vision). For example intelligent mobile phone with a camera and a GPS can be used to collect information. Device and method login data and use the Internet, PAN -net and server -services in the real time.

In the priority document and the Internet there is data from the Naesset-method. non- parameter methods, one timber method and Relascobe -method. One timber modeling is produced from ALS (The Advanced Light Source)-data.

## In the method is used the technique:

The laser distance and the angle measurements are in patent FI 101016 B and more in the patent application FI 20080493. The distance laser is based on difference measurement of transmit and receiving time. The coherent light pulse times and difference are measured with TDC-ship in pico -seconds. Time of flight (ToF) is the travel time of light in the laser distance measurement.

## The effective values of the invention

In intelligent mode the hits of object are on mathematical curve, that a algorithm finds. The measurement values of the object are in calculated e.g. differences and differences of differences. Correction is concluded from statistic method and Boolean algebra.

## Description of methods and algorithms

Distance measurements, which are synchronized to be parallel and simultaneous - the same direction and the same time (have a simultaneous and mutual triggering signal), and the adapted algorithms recognize and analyze the shapes of the object. The parallel beams guarantee that the shape of the object (e.g. the diameter of a tree) can be found out regardless of the distance to the location of the timber.

The mathematic formulas and algorithms are as follows:

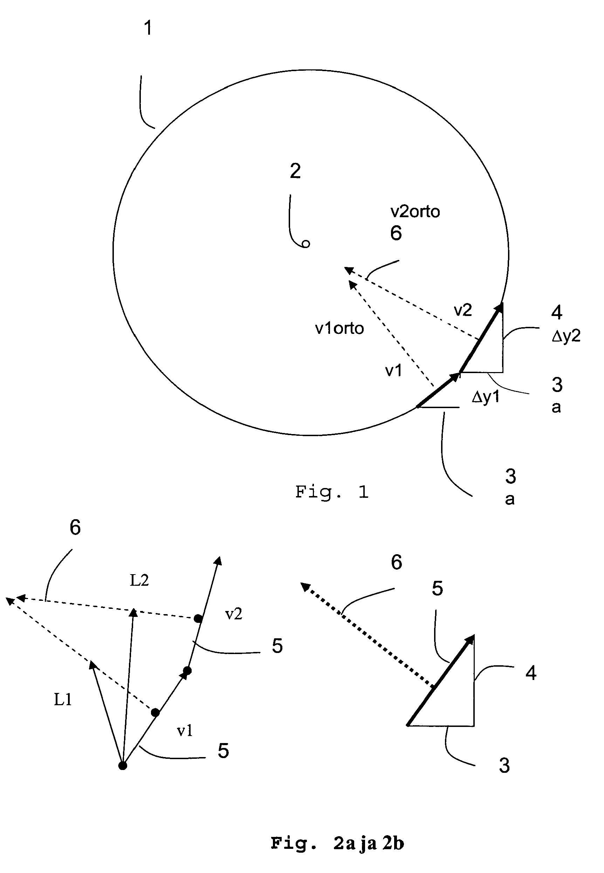

dy12 is (distance 1 - distance 2) difference.
dy23 is (distance 2 - distance3) difference.
dy13 is (distance 1 - distance 3) difference etc.
a (hahlo) is the selected or controlled distance of laser spots. t is variable (see fig. 1 and fig. 2. !)
L1 is vector, that has coordinate a and coordinate dy12.
L2 is vector, that has coordinate a and coordinate dy23 etc.
L12 is vector, that has coordinate 2a and coordinate dy13.
rlt is the simultaneous or calculated diameter of timber.

simultaneous algorithm:

rlt is the simultaneous diameter of timber.

calculated diameter of timber.

```
t = (-a*a-0.5*(dy12+dy23)*dy23) / (dy12*a - a*dy23)
```

```
L1 = 0.5*a-t*dy12;
```

```
L2 = 0.5 * dy12 + t*a;


rIt = 1.0*Math.sqrt(L1*L1 + L2*L2);
```

The algorithm calculates first differences of other sensors.

The algorithm calculates variables t, L1,L2, L12 etc.

The algorithm excludes away all pad measurement values.

The algorithm logins statistic values and stores correct values.

In the invention measurements are e.g. in the microcontroller and then data analysed in the intellectual mobile phone or in the server. Data is stored in to database.

The actual size of the test area is measured. The test area can be in the alternative form e.g. ellipse, circle, oblong, random shape. The Dynamic test area arises constant distance (a, hahlo) of other distance measurement laser sensors and measured distances. The oblong area is variable hahlo * distance.

GPS- locator gets e.g. locator, direction and speed data. When a vehicle (in that is left side meter) e.g. rotates left, in the near trees are at longer time in the view and in the distance trees are at shorter time in the view. The direction affects the time, in that thee (the tree) is in (the) view (in the measurement).

The invention uses several statistic methods in the intelligent calculation or inference. The surface of timber tells timber sort (birch, pine, spruce) in the laser distance measurement.

The invention is presented in patent claims 1 and 6.

### Description of drawings

One method mode of invention is as cutting figures. Figures 1, 2a and 2b are expressed with principal of vector calculation.

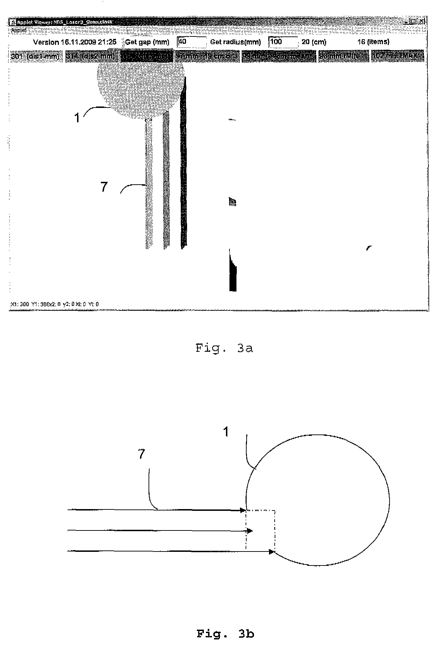

The figures 3a and 3b express the measurement signal slot (path) of three laser spots to survey of timber. The figure 3a expresses statistic PC -simulation data from the device, that waved in hand and measures 16 values. "Anna vali" means "Get distance a / hahlo". "Anna säde" means "Get diameter".

### The examples

In the figure 1 reference number 1 is cross-section and horizontal carving on that three laser spot hits are. Variable a (hahlo, reference number 3) is distance of spot. The reference number 4 is mathematical or electrical difference of the two distance measurements. The differences are in formulas or diagrams $\Delta y1$, $\Delta y2$, $\Delta y3$ etc. in form. The reference number 5 is vector. The reference number 6 is an array to the center point (the reference number 2) of the timber. In the figures 2a and 2b are zooming from the figure 1. The reference number 7 expresses the synchronized, same direct measurement signal slot (path) of three laser spots to survey of timber.

### Alternative solution

As a specialist knows, the method has many alternative software, method, device solutions. For example, the intellectual mobile phone is as master device with extra devices or the intellectual mobile phone is as slave device. Distance laser or / and distance laser camera analyses the space of forest canopy young forest, saplings or usual free space in the forest or in the other solution.

GPS -sensor produces direction, place and speed data in NMEA -code. The device has own extra sensors, for example angle sensors, that measure the height of the tree etc.

Constant distances of laser beam are as variable name hahlo or a. Distances of laser beam can be controlled and can be changing.

The surface of the tree, e.g. the roughness, branches and the species of the tree and also the quality of many other different surfaces can be measured. The measuring device recognizes uneven parts on the surface of the object in an effective way.

With the statistic handling and Boolean algebra measurement data is adapted to circle, ellipse, line, curves etc. Forms or variables are calculated.

The quality of the surface of object is measured and timber sort is analyzed. For example the bark of pine is strong uneven. The bark of spruce is a little uneven and the quality of the surface of birch is even and uneven. The quality of the surface of object is measured or the analyzed model is programmed. The quality of the surface is analyzed e.g. with the effect coefficient of differences.

For example, spruce is cone/ triangle in profile and circle from above, Pine and birch are sphere. The tree sorts have the other color that changes along the other season and calendar.

In the Method the Number of pieces or working items is calculated.

Other application is e.g. length, length difference, volume, robot, measurement and actuator device and free space and object detection. In the view the object detection minimizes errors and damage of object.

The measurement uses other direction, other view, other background.

The position of everyone tree in the map is measured and is connected with the other data. Distances from free to free are measured. The height of tree is with tangent angles and angle sensor. The horizontal and vertical planes are detected.

The method can use sensor net, PAN -net (Personal Area Net), Internet, GSM etc. The data is transferred to handling still and is connected with other data.

At its best the adjoining (side by side) laser measurements use other wavelengths and are concurrently (at the same time). In the application laser sensors are synchronized in succession or triggered in rotation. The laser spots are in the same direction, or spots are set to the selected zooming angles. Your can be seen in more detail in the priority document.

**Claims**

1. The Method that measures forest density and woods quantity or other object, uses laser distance measurement device and computer device in vertical and horizontal levels, said method including:

   a. The method measures one object or free room/space, proportion, ratio, difference ratio, absolute ratio.
   b. The method uses statistic and adaptation curves.
   c. Laser distance measurement devices (sensors) are installed (mounted) in same directed, same synchronized and constant distance (a) of other distance.
   d. The method calculates among others the dimensions of an object.
   e. The method uses other backgrounds and device transfer in the calculation
   f. The method calculates dynamic measuring area with (hahlo, a)

2. The method of claim 1 wherein said with three or more same directed, same synchronized, and constant distances (a, hahlo) of other distance measurement laser sensors is measured dimension (for instance shapes, diameter) of a circular or ellipse object. In the method is used for example vector calculation or line integral calculation with algorism. Scales, points and differences in transfer in the same direction to the object or from the object with algorithm find out the shapes of the object (for example a tree).

3. The method of claims 1-2 wherein said method uses or device has graphic properties and extra properties and extra device components for example, personal area net (PAN), intellectual mobile (phone), camera, distance laser camera, direction-, angle-, absolute-, pulse-, and GPS - sensors.

4. The method of claims 1-3 wherein said method functions or is selected in other modes, for example the location and dimensions measurement of a tree, height or length of a tree, free area measurement in forest, saplings, young forest, locations, energy tree (wood), dynamic measurement area, cubic meter measurement, $m^2$/area, $m^3$/area, optimization of timber, sorting, species of a tree and minimum hahlo (a).

5. The method of claims 1-4 wherein said in the method the hand device gets more statistic measurements. The method takes off irrelevant tai invalid values.

6. The Method that measures forest density and woods quantity or other object, uses laser distance measurement device and computer device in vertical and horizontal levels, said method including: In the method is measured free growth area (volume, generally air space) in a forest, energy tree and shapes of tree (forest) with distance laser camera.

7. The method of claims 1-6 wherein said the method takes a snap shot or samples and calculates statistics for example from shapes. Samples are taught (analyzed, instructed) to the device for better algorithms.

8. The method of claims 1-7 wherein said measurement device measures in the real time the density of forest, when the forest is made more sparse.

9. The method of claims 1-8 wherein said with method is measured timber sort proportion: log part, fiber tree part, energy wood part, the uniformity or non uniformity of surface of object and the free or tree sort.

10. The method of claims 1-9 wherein said installing with something vehicle intelligent measurement device makes *Light Detection and Ranging (LIDAR) in the forest. The measured tree or* saplings *data (dimensions,* diameters, shapes, ...) are connected with login *LIDAR* data of airplane or model plane, with data of forest high models / shape models etc.

1

2

v2orto

6

v1orto

v2

v1

4

Δy2

3

Δy1

a

3

a

Fig. 1

6

L2

v2

5

L1

v1

5

6

5

4

3

Fig. 2a ja 2b

Fig. 3a

Fig. 3b

**EUROPEAN SEARCH REPORT**

Application Number

EP 09 39 6007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BIENERT A ET AL: "Application of terrestrial laserscanners for the determination of forest inventory parameters" INTERNATIONAL ARCHIVES OF PHOTOGRAMMETRY, REMOTE SENSING AND SPATIAL INFORMATION SCIENCES, INTERNATIONAL SOCIETY FOR PHOTOGRAMMETRY AND REMOTE SENSING, GB, vol. XXXVI, no. PART 5, 25 September 2006 (2006-09-25), pages 1-5, XP008100457 ISSN: 1682-1750 * the whole document * | 1-10 | INV. G01B5/00 G01B11/25 G06K9/00 G01B11/08 |
| X | HENNING J G ET AL: "Ground-based laser imaging for assessing three-dimensional forest canopy structure" PHOTOGRAMMETRIC ENGINEERING AND REMOTE SENSING, SENSING, BETHESDA, vol. 72, no. 12, 1 December 2006 (2006-12-01), pages 1349-1358, XP008100164 ISSN: 0099-1112 * the whole document * | 1-10 | |

-/--

TECHNICAL FIELDS SEARCHED (IPC)

G01B
G06K

The present search report has been drawn up for all claims

| Place of search | Date of completion of the search | Examiner |
|---|---|---|
| Munich | 1 February 2010 | Beyfuß, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 39 6007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIMONSE M ET AL: "Automatic Determination of Forest Inventory Parameters Using Terrestrial Laserscanning" INTERNATIONAL ARCHIVES OF PHOTOGRAMMETRY, REMOTE SENSING AND SPATIAL INFORMATION SCIENCES, INTERNATIONAL SOCIETY FOR PHOTOGRAMMETRY AND REMOTE SENSING, GB, [Online] vol. 36, no. PART 8/W2, 3 October 2004 (2004-10-03), pages 251-253, XP002512277 ISSN: 1682-1750 Retrieved from the Internet: URL:http://www.natscan.uni-freiburg.de/sui te/pdf/030916_1642_1.pdf> [retrieved on 2003-01-01] * the whole document * ----- | 1-10 | |
| X | THIES M ET AL: "Terrestrische Laserscanner im Forst - für forstliche Inventur und wissenschaftliche Datenerfassung" A F Z - DER WALD: ZEITSCHRIFT FUER WALDWIRTSCHAFT UND UMWELTVORSORGE, [Online] vol. 58, no. 22, pages 1126-1129, XP002512276 ISSN: 1430-2713 Retrieved from the Internet: URL:http://www.natscan.uni-freiburg.de/sui te/pdf/031125_1348_1.pdf> [retrieved on 2003-01-01] * the whole document * ----- -/-- | 1-10 | TECHNICAL FIELDS SEARCHED (IPC) |

The present search report has been drawn up for all claims

| Place of search | Date of completion of the search | Examiner |
|---|---|---|
| Munich | 1 February 2010 | Beyfuß, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt
European
Patent Office
Office européen
des brevets

## EUROPEAN SEARCH REPORT

Application Number

EP 09 39 6007

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WATT P J ET AL: "Measuring forest structure with terrestrial laser scanning" INTERNATIONAL JOURNAL OF REMOTE SENSING, BASINGSTOKE, HANTS, GB, vol. 26, no. 7, 10 April 2005 (2005-04-10), pages 1437-1446, XP008100167 ISSN: 0143-1161 * the whole document * | 1-10 | |
| X | HOPKINSON C ET AL: "Assessing forest metrics with a ground-based scanning lidar" CANADIAN JOURNAL OF FOREST RESEARCH, NATIONAL RESEARCH COUNCIL OF CANADA, OTTAWA, CA, vol. 34, no. 3, 1 March 2004 (2004-03-01), pages 573-583, XP008100166 ISSN: 0045-5067 * the whole document * | 1-10 | |
| X | US 2003/160974 A1 (DEMEYERE MICHAEL [BE] ET AL) 28 August 2003 (2003-08-28) * paragraph [0001] * * paragraph [0056] - paragraph [0121]; figures 1-7 * | 1-10 | TECHNICAL FIELDS SEARCHED (IPC) |

The present search report has been drawn up for all claims

| Place of search | Date of completion of the search | Examiner |
|---|---|---|
| Munich | 1 February 2010 | Beyfuß, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 39 6007

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2010

| Patent document cited in search report | Publication date | Patent family member(s) | | Publication date |
|---|---|---|---|---|
| US 2003160974 A1 | 28-08-2003 | AT | 326684 T | 15-06-2006 |
| | | AU | 7560701 A | 08-01-2002 |
| | | WO | 0201150 A1 | 03-01-2002 |
| | | CA | 2413446 A1 | 03-01-2002 |

EPO FORM P0459

For more details about this annex : see Official Journal of the European Patent Office, No. 12/82